# EUROPÄISCHE PATENTSCHRIFT

(11) **EP 3 126 169 B1**
(45) Veröffentlichungstag und Bekanntmachung des Hinweises auf die Patenterteilung: **09.10.2019**
(21) Anmeldenummer: 15722054.2
(22) Anmeldetag: 31.03.2015
(51) Int. Cl.: B01D 46/10, B01D 46/52, B60H 3/06, B01D 46/00

(54) **LUFTFILTER FÜR EINE BELÜFTUNGSEINRICHTUNG EINES KRAFTWAGENS**
AIR FILTER FOR A VENTILATION DEVICE OF A MOTOR VEHICLE
FILTRE À AIR POUR DISPOSITIF DE VENTILATION D'UN VÉHICULE AUTOMOBILE

(30) Priorität: 01.04.2014 DE 102014004740
(43) Veröffentlichungstag der Anmeldung: 08.02.2017
(73) Patentinhaber: Daimler AG, 70327 Stuttgart (DE)
(72) Erfinder: SCHUMACHER, Eric, 55411 Bingen (DE)
(74) Vertreter: JENSEN & SON
(86) Internationale Anmeldenummer: PCT/EP2015/000687
(87) Internationale Veröffentlichungsnummer: WO 2015/149934

(56) Entgegenhaltungen:
- EP-A1- 2 463 009
- DE-A1-102012 005 188
- DE-A1-102012 012 669

## Beschreibung

Die Erfindung betrifft einen Luftfilter für eine Belüftungseinrichtung eines Kraftwagens gemäß dem Oberbegriff von Patentanspruch 1. Außerdem betrifft die Erfindung eine Anordnung eines solchen Luftfilters in einen Strömungsquerschnitt einer solchen Belüftungseinrichtung gemäß dem Oberbegriff von Patentanspruch 9.

Aus der EP 463 009 A1 ist ein Luftfilter bekannt, mit einem Faltenpack und einem das Faltenpack zumindest teilweise umlaufenden Rahmen, wobei der Rahmen wenigstens eine Aussparung für einen Vorsprung eines Gehäuses für den Luftfilter aufweist.

Der DE 10 2012 012 669 A1 ist ein Luftfilter für eine Belüftungseinrichtung eines Fahrzeuges als bekannt zu entnehmen, mit einem Filterrahmen und einem an dem Filterrahmen gehaltenen Filtermedium, wobei der Luftfilter in eine Einschubrichtung in einen Aufnahmebereich der Belüftungseinrichtung einschiebbar und quer zu der Einschubrichtung von Luft durchströmbar ist. Dabei ist es vorgesehen, dass der Filterrahmen an einer in die Einschubrichtung frontseitigen Stirnseite wenigstens eine quer zur Einschubrichtung bereichsweise offene Ausnehmung aufweist, in welche zum Fixieren des Filterrahmens in dem Aufnahmebereich ein korrespondierender, auf Seiten der Belüftungseinrichtung vorgesehener Vorsprung einbringbar ist.

Außerdem ist aus der DE 10 2012 005 188 A1 ein Filterelement zum Einsetzen in ein Gehäuse einer Belüftungs- oder Klimaanlage bekannt, umfassend einen Faltenbalg mit Falten und einer Stirnseite, welche einer Wand des Gehäuses zuwendbar ist. Die Falten definieren auf der Stirnseite jeweils Faltenquerschnittsflächen, wobei der Stirnseite mindestens ein Führungsschacht zugeordnet ist, und wobei eine Faltenquerschnittsfläche im Bereich eines Führungsschachts eine andere Geometrie aufweist als die Faltenquerschnittsflächen einer Vielzahl von Falten. Dabei ist eine Vielzahl von regelmäßigen Faltenwänden vorgesehen, wobei je zwei flankierende Faltenwände den Führungsschacht flankieren.

Aus der DE 10 2005 048 841 B3 bereits als bekannt zu entnehmen, einen Luftfilter mit einer flächigen, schubladen- bzw. kassettenartigen Erstreckung entlang seiner Erstreckungsrichtung bzw. quer zu einer Strömungsrichtung in einen Strömungsquerschnitt der Belüftungseinrichtung einzuschieben. Der Luftfilter umfasst dabei ein entlang seiner flächigen Erstreckung angeordnetes Filtermedium, welches vorliegend umlaufend durch eine Rahmenwand begrenzt ist. In der Rahmenwand sind dabei mehrere Ausschnitte ausgenommen, welche zur Führung des Luftfilters beim Einschieben in den Strömungsquerschnitt mit Führungselementen in Form von Führungszapfen der Belüftungseinrichtung in Eingriff bringbar sind.

Die Führungszapfen durchsetzen dabei das Filtergehäuse und bedingen daher eine aufwendige Gestaltung des Luftfilters. Um zudem eine hinreichende Führungslänge zu erhalten, ist es erforderlich, dass sich an die entsprechenden Ausschnitte des Filtergehäuses jeweilige Führungsdome anschließen, welche die Führungszapfen aufnehmen können. Auch dies bedingt eine aufwendigere Gestaltung des Luftfilters.

Aufgabe der vorliegenden Erfindung ist es daher, einen Luftfilter sowie eine Anordnung der eingangsgenannten Art zu schaffen, welche eine äußerst zuverlässige und dennoch einfache Führung des Luftfilters beim Einsetzen in den Aufnahmeschacht ermöglichen.

Diese Aufgabe wird erfindungsgemäß durch einen Luftfilter und eine Anordnung mit den Merkmalen des Patentanspruchs 1 gelöst. Vorteilhafte Ausgestaltungen mit zweckmäßigen Weiterbildungen der Erfindung sind in den übrigen Patentansprüchen angegeben.

Um einen Luftfilter der eingangs genannten Art zu schaffen, welcher auf äußerst zuverlässige und dennoch einfache Weise eine entsprechende Führungsmöglichkeit zum Einführen des Luftfilters in den Aufnahmeschacht bzw. zum Ausziehen aus dem heraus, ist es erfindungsgemäß vorgesehen, dass der Ausschnitt als Ausklinkung an einer Kante der Rahmenwand gestaltet und bezogen auf die Kante hinterschnitten ausgeführt ist, wodurch eine Abstützbarkeit des Luftfilters beim Einschieben in zwei Richtungen quer zur Einschieberichtung gegeben ist. Demzufolge ist es erfindungsgemäß vorgesehen, dass der wenigstens eine Ausschnitt zu einer Kante an einer Außenseite bzw. Breitseite der Rahmenwand des Luftfilters hin offen ausgebildet ist. Ein solcher, nach außen zu der Kante der Rahmenwand hin offener Ausschnitt wird üblicher Weise als Ausklinkung bezeichnet. Diese Ausklinkung kann sowohl durch Trennen als auch durch Umformen, Urformen oder ein anderes Verfahren in die Rahmenwand eingebracht oder anderweitig an der Rahmenwand vorgesehen werden.

Durch diese Ausklinkung ist es möglich, das korrespondierende Führungselement auf Seiten des Aufnahmeschachts beispielsweise über eine erhebliche oder die gesamte Länge entlang des Filters verlaufen zu lassen, ohne dass hierbei der Luftfilter mit einem Führungselement, beispielsweise einer Führungsschiene, durchsetzt werden muss. Die Führungsschiene kann somit im Wesentlichen an der Außenseite, beispielsweise der Breitseite, des Filtergehäuses verlaufen, so dass beispielsweise innerhalb des Filtermediums nicht extra Aussparungen vorgesehen werden müssen. Dies ermöglicht eine einfache Ausgestaltung des Luftfilters, indem lediglich ein bzw. eine Mehrzahl von Ausklinkungen vorgesehen werden müssen. Zudem ergibt sich hierdurch eine besonders günstige Führungsmöglichkeit, da sich - wie oben erläutert - das korrespondierende Führungselement auf Seiten der Belüftungseinrichtung in einfacher Weise über die komplette Länge des Luftfilters erstrecken kann.

Die Ausklinkung ist dabei bezogen auf die Kante der Rahmenwand hinterschnitten ausgeführt, so dass eine Abstützbarkeit des Luftfilters beim Einschieben in den beiden Raumrichtungen quer bzw. senkrecht zur Einschieberichtung gegeben ist. Somit ist die Ausklinkung derart ausgestaltet, dass sich eine Bewegung des Luftfilters zumindest im Wesentlichen lediglich in Einschieberichtung respektive Ausziehrichtung realisieren lässt.

Ein besonders einfacher und dennoch leicht führbarer Luftfilter lässt sich realisieren, indem die Ausklinkung und somit auch das korrespondierende Führungselement auf Seiten der Belüftungseinrichtung im Querschnitt eine Winkelform oder eine T-Form aufweisen.

Alternativ hierzu ist es insbesondere auch denkbar, die Ausklinkung als schmalen Schlitz mit einer breiten Bucht im von der Kante beabstandeten Bereich auszubilden. Ein derartiger, beispielsweise nach Art eines Schlüssellochs gestalteter Ausschnitt ermöglicht ebenfalls eine gute und leicht gängige Führung des Luftfilters.

In weiterer Ausgestaltung der Erfindung sind mehrere Ausschnitte in Einschieberichtung kongruent angeordnet, wodurch sie beim Einschieben mit einem einzelnen Führungselement in Eingriff bringbar sind. Somit kann das Führungselement auf Seiten der Belüftungseinrichtung beispielsweise als linear verlaufende Führungsschiene ausgebildet werden, welche entsprechend einfach gestaltet ist und entlang welcher sich eine leichtgängige Führung des Luftfilters realisieren lässt.

Weiterhin vorteilhaft ist eine Ausgestaltungsform, bei der das Filtermedium als gefaltetes Filterflies ausgeführt und an den Rahmenwänden mindestens bereichsweise befestigt ist. Eine bereichsweise Befestigung ist insbesondere denkbar, weil separate Rahmenwände nur im Bereich quer zur Faltung ausgebildet sind und die weiteren Rahmenwände durch das gefaltete Filterflies selbst gebildet werden können.

Schließlich hat es sich als vorteilhaft gezeigt, wenn jeweilige Knickkanten einer Faltung des Filtermediums in Einschieberichtung ausgerichtet sind. Hierdurch ergibt sich ein entsprechend eigensteifes, beim einschieben unempfindliches Filtermedium.

Die vorstehend im Zusammenhang mit dem erfindungsgemäßen Luftfilter genannten Vorteile gelten in eben solcher Weise für die Anordnung gemäß Anspruch 9.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

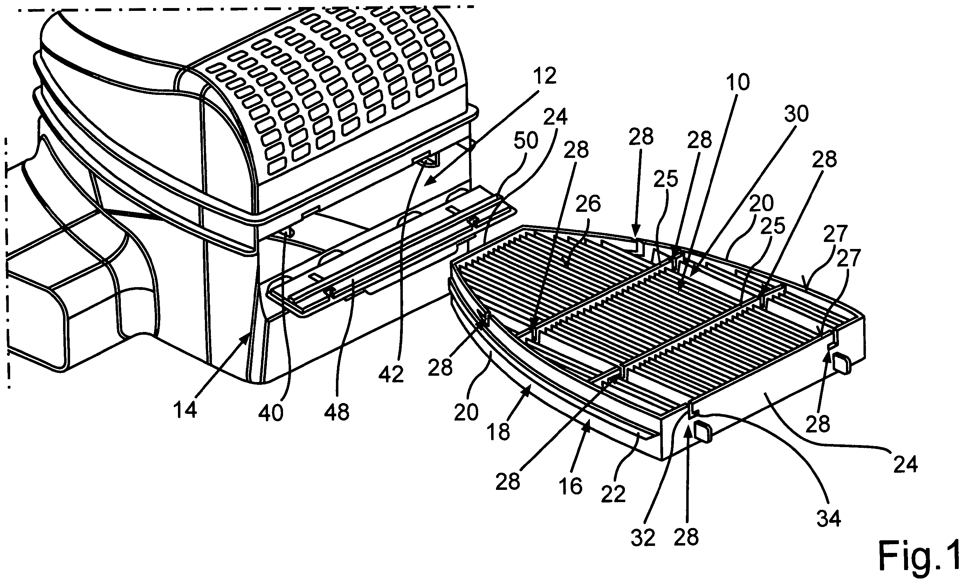

- Fig. 1: eine Perspektivansicht auf einen Luftfilter und auf eine Belüftungseinrichtung eines Kraftwagens, in dessen Aufnahmeschacht der Luftfilter anordenbar ist, wobei der Luftfilter ein Filtergehäuse mit jeweiligen Führungsaussparungen zum Verbinden des Luftfilters mit zwei korrespondierenden, am Aufnahmeschacht angeordneten Führungselementen umfasst, entlang welchen der Luftfilter in den Aufnahmeschacht einschiebbar bzw. aus diesem ausziehbar ist, wobei die jeweiligen Führungsaussparungen zu einer Außenseite des Filtergehäuses hin offen ausgebildet sind; und in

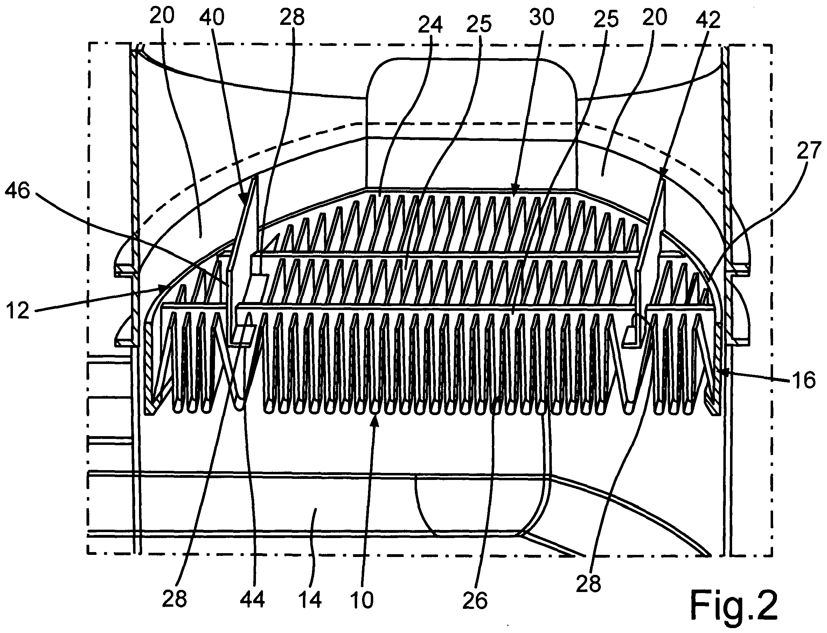

- Fig. 2: eine perspektivische Vorderansicht auf die Anordnung des vollständig in den Aufnahmeschacht eingeschobenen Luftfilters gemäß Fig. 1.

Die Fig. 1 und 2 zeigen in einer Perspektivansicht und in einer perspektivischen Vorderansicht einen Luftfilter 10 mit einer flächigen Erstreckung, entlang welcher er auf im Weiteren noch näher beschriebene Weise in einen Strömungsquerschnitt 12 einer Belüftungseinrichtung 14 einschiebbar ist. Die Belüftungseinrichtung 14 ist dabei Teil einer Heizungs- und/oder Klimaanlage eines Kraftwagens und umfasst einen Klimakasten bzw. Luftfilterkasten, in dessen Bereich der Strömungsquerschnitts 12 für den Luftfilter 10 vorgesehen ist.

Wie aus Fig. 1 erkennbar ist, weist der Luftfilter 10 vorliegend eine vollständig umlaufende Rahmenwand 16 auf, welche an jeweiligen Schmalseiten 18 Rahmenwandteile 20 aufweist, welche bogenförmig und nicht-parallel zueinander verlaufen. An der Außenseite dieser Rahmenwandteile 20 sind entsprechende Dichtelemente 22 vorgesehen, welche ein Überströmen von ungefilterter Leckluft zwischen den jeweiligen Rahmenwandteilen 20 und jeweils korrespondierenden Wänden des Strömungsquerschnitts 12 hindurch vermeiden sollen.

Weiterhin umfasst die Rahmenwand 16 zwei parallel zueinander angeordnete Rahmenwandteile 24, welche gemeinsam mit dem Rahmenwandteilen 20 die umlaufende Rahmenwand 16 bilden. Außerdem sind zwei mittlere Wandteile 25 als Spanten ausgebildet, welche die Rahmenwandteile 20 miteinander verbinden und vorliegend parallel zu den Rahmenwandteilen 24 verlaufen. Die Rahmenwand 16 bzw. die Rahmenwandteile 20, 24 begrenzt vorliegend umlaufend ein Filtermedium 26, mittels welchem die die Belüftungseinrichtung 14 durchströmende Luft, beispielsweise Frischluft, gereinigt werden kann. Das Filtermedium 26 ist hierbei vorliegend als gefaltetes Filterfließ ausgeführt und zumindest bereichsweise an den Rahmenwandteilen 20, 24 der Rahmenwand 16 befestigt. Jeweilige Knickkanten 17 einer Faltung des Filtermediums 26 sind hierbei in Einschieberichtung ausgerichtet.

Als im Rahmen der Erfindung mit umfasst ist es zu betrachten, dass insbesondere in Faltenrichtung die jeweiligen Rahmenwandteile 20 auch durch das gefaltete Filterflies 26 selber gebildet sein kann. In diesem Zusammenhang ist es somit auch denkbar, dass zumindest ein Ausschnitt bzw. eine Ausklinkung 28 unmittelbar in das Filterflies als Rahmenwandteil eingebracht wird.

Das Filtermedium 26 kann alternativ natürlich insbesondere auch durch einen Blockfilter aus Schaum oder einem Schüttmaterial gebildet sein.

Wie nun insbesondere aus Fig. 2 erkennbar ist, sind sowohl in den Rahmenwandteilen 24 der Rahmenwand 16 als auch in den als Spanten dienenden Wandteilen 25 insgesamt acht Ausschnitte 28 vorgesehen, die jeweils als Ausklinkung an einer Kante 27 der Rahmenwand 16 bzw. der jeweiligen Rahmenwandteile 24 bzw. Wandteile 25 gestaltet und bezogen auf die Kante 27 hinterschnitten ausgeführt sind. Eine solche Ausklinkung 28 wird vorliegend insbesondere durch Trennen bzw. durch Umformen, also beispielsweise durch Stanzen oder dgl. hergestellt. Gleichwohl ist auch jede andere Technologie, insbesondere auch ein Urformenverfahren, denkbar.

Die Besonderheit der jeweiligen Ausklinkung 28 ist darin zu sehen, dass diese zur jeweiligen Kante 27 des entsprechenden Rahmenwandteils 24 bzw. Wandteils 25 hin bzw. zu einer Außenseite, in diesem Fall einer Breitseite 30 des Luftfilters 10 hin, offen ausgebildet ist. Jede der Ausschnitte bzw. Ausklinkungen 28 ist vorliegend insgesamt etwa Winkelförmig bzw. L-förmig ausgebildet und umfasst einen Schenkel 32, welcher zur Kante 27 hin offen ausgebildet ist. An diesen Schenkel 32 schließt sich vorliegend ein etwa senkrecht dazu angeordneter Schenkel 34 an, welcher sich demzufolge etwa parallel zur Kante 27 erstreckt.

Als im Rahmen der Erfindung mit umfasst ist es zu betrachten, dass der Schenkel 32 und der Schenkel 34 auch einen im Wesentlichen T-förmigen Querschnitt der jeweiligen Ausklinkung 28 bilden können. Ebenfalls ist es denkbar, dass der jeweilige Ausschnitt 28 als schmaler Schlitz mit einer breiten Bucht im von der Kante 27 beabstandeten Bereich ausgebildet ist. Wesentlich bei allen Ausgestaltungen ist es jedoch, dass die jeweilige Ausklinkung 28 bezogen auf die Kante 27, zu welcher hin die Ausklinkung offen ausgebildet ist, hinterschnitten ausgeführt ist, wodurch eine Abstützbarkeit des Luftfilters 10 beim Einschieben in zwei Richtungen quer zur Einschieberichtung bzw. Auszugsrichtung gegeben ist.

Wie des Weiteren in Zusammenschau mit Fig.2, welche in einer perspektivischen Vorderansicht die Anordnung des Luftfilters 10 innerhalb des Strömungsquerschnitts 12 der Belüftungseinrichtung 14 zeigt, erkennbar ist, sind vorliegend jeweils vier linke und vier rechte Ausschnitte bzw. Ausklinkungen 28 in Einschieberichtung kongruent innerhalb der zugehörigen Rahmenwandteile 24 bzw. Wandteile 25 angeordnet, wodurch sie beim Einschieben in den Strömungsquerschnitts 12 der Belüftungseinrichtung 14 mit einem jeweiligen, schienenartigen Führungselement bzw. Führungsschiene 40, 42 in Eingriff bringbar bzw. gebracht sind. Die beiden Führungsschienen 40, 42 sind demzufolge entsprechend geradlinig ausgebildet. Hierdurch ist es möglich, den Luftfilter 10 in einfacher Weise mittels der Ausklinkungen 28 entlang der Führungsscheinen 40, 42 in den Strömungsquerschnitt 12 der Belüftungseinrichtung 14 einzuschieben bzw. aus diesem auszuziehen. Hier wäre es natürlich auch denkbar, gekrümmte Führungselemente einzusetzen, um beispielsweise eine entsprechende Bewegungsbahn des Luftfilters 10 beim Einschieben und Ausziehen in bzw. aus dem Strömungsquerschnitt 12 der Belüftungseinrichtung 14 zu erreichen.

Wie des Weiteren aus Fig. 2 erkennbar ist, sind die jeweiligen Führungselemente bzw. Führungsschienen 40, 42 auf Seiten der Belüftungseinrichtung 14 in ihrem Querschnitt an die jeweiligen Ausklinkungen 28 angepasst und im Wesentlichen L-förmig bzw. winkelförmig ausgebildet mit jeweiligen Schenkeln 44 und 46.

Durch die Gestaltung der Schenkel 32 und 34 der Ausklinkungen und die korrespondierende Gestaltung der Schenkel 44 und 46 der jeweiligen Führungsschiene 40, 42 wird bei Einschieben und Ausziehen eine Abstützbarkeit des Luftfilters 10 in zwei Richtungen quer zur Einschieberichtung, genauer gesagt in den zwei zur Einschieberichtung senkrechten Raumrichtungen, erreicht. Somit ist lediglich ein Einschieben bzw. Ausziehen des Luftfilters 10 möglich.

Wie schließlich aus Fig.1 erkennbar ist, ist innerhalb des Gehäuses der Belüftungseinrichtung 14 eine entsprechende Klappe 48 vorgesehen auf, welche in geöffnetem Zustand gezeigt ist. An dieser Klappe 48 befindet sich ein entsprechendes Dichtelement 50, mittels welchem diese in geschlossenem Zustand gegen das korrespondierende Rahmenwandteil 24 der Rahmenwand 16 abgedichtet ist.

## Patentansprüche

1. Luftfilter (10) für eine Belüftungseinrichtung (14) eines Kraftwagens, mit einer flächigen Erstreckung, entlang welcher der Luftfilter (10) quer zu einer Strömungsrichtung in einen Strömungsquerschnitt (12) der Belüftungseinrichtung (14) einschiebbar ist, und mit einem entlang seiner flächigen Erstreckung angeordneten Filtermedium (26), welches zumindest bereichsweise durch wenigstens eine Rahmenwand (16) begrenzt ist, welche wenigstens einen Ausschnitt (28) aufweist, der zur Führung des Luftfilters (10) beim Einschieben in den Strömungsquerschnitt (12) mit Führungselementen (40, 42) der Belüftungseinrichtung (14) in Eingriff bringbar ist,
**dadurch gekennzeichnet, dass**
der Ausschnitt (28) als Ausklinkung an einer Kante (27) der Rahmenwand (16) gestaltet und bezogen auf die Kante (27) hinterschnitten ausgeführt ist, wodurch eine Abstützbarkeit des Luftfilters (10) beim Einschieben in zwei Richtungen quer zur Einschieberichtung gegeben ist.

2. Luftfilter (10) nach Anspruch 1,
**dadurch gekennzeichnet, dass**
der jeweilige Ausschnitt (28) L-förmig ausgebildet ist.

3. Luftfilter (10) nach Anspruch 1,
**dadurch gekennzeichnet, dass**
der jeweilige Ausschnitt (28) T-förmig ausgebildet ist.

4. Luftfilter (10) nach Anspruch 1,
**dadurch gekennzeichnet, dass**
der jeweilige Ausschnitt (28) als schmaler Schlitz mit einer breiten Bucht im von der Kante (27) beabstandeten Bereich ausgebildet ist.

5. Luftfilter (10) nach einem der vorhergehenden Ansprüche,
**dadurch gekennzeichnet, dass**
mehrere Ausschnitte (28) vorgesehen sind.

6. Luftfilter (10) nach einem der vorhergehenden Ansprüche,
**dadurch gekennzeichnet, dass**
mehrere Ausschnitte (28) in Einschieberichtung kongruent angeordnet sind, wodurch sie beim Einschieben mit einem einzelnen Führungselement (40, 42) in Eingriff bringbar sind.

7. Luftfilter (10) nach einem der vorhergehenden Ansprüche,
**dadurch gekennzeichnet, dass**
das Filtermedium (26) als gefaltetes Filterfließ ausgeführt ist und an Rahmenwandteilen (20, 24) den Rahmenwand (16) zumindest bereichsweise befestigt ist.

8. Luftfilter (10) nach einem der vorhergehenden Ansprüche,
**dadurch gekennzeichnet, dass**
Knickkanten einer Faltung des Filtermediums (26) in Einschieberichtung ausgerichtet sind.

9. Anordnung eines Luftfilters (10) in einer Belüftungseinrichtung (14) eines Kraftwagens, bei welcher der Luftfilter (10) eine flächige Erstreckung aufweist, entlang welcher der Luftfilter (10) quer zu einer Strömungsrichtung in einen Strömungsquerschnitt (12) der Belüftungseinrichtung (14) eingeschoben ist, und mit einem entlang seiner flächigen Erstreckung angeordneten Filtermedium (26), welches zumindest bereichsweise durch wenigstens eine Rahmenwand (16) begrenzt ist, welche wenigstens einen Ausschnitt (28) aufweist, der zur Führung des Luftfilters (10) beim Einschieben in den Strömungsquerschnitt (12) mit Führungselementen (40, 42) der Belüftungseinrichtung (14) in Eingriff bringbar ist, **dadurch gekennzeichnet, dass**
der Ausschnitt (28) als Ausklinkung an einer Kante (27) der Rahmenwand (16) gestaltet und bezogen auf die Kante (27) hinterschnitten ausgeführt ist, wodurch der Luftfilter (10) beim Einschieben in zwei Richtungen quer zur Einschieberichtung abgestützt ist.

## Claims

1. Air filter (10) for a ventilation device (14) of a motor vehicle, having a planar extent along which the air filter (10) can be inserted transversely to a direction of flow into a flow cross-section (12) of the ventilation device (14), and having a filter medium (26), which is arranged along its planar extent and is at least in certain areas bounded by at least one frame wall (16), which has at least one cutout (26), which can be brought into engagement with guide elements (40, 42) of the ventilation device (14) to guide the air filter (10) while it is being inserted into the flow cross-section (12),
**characterised in that**
the cutout (26) is designed as a notch at an edge (27) of the frame wall (16) and is undercut with reference to the edge (27), resulting in a supportability of the air filter (10) in the insertion process in two directions transverse to the insertion direction.

2. Air filter (10) according to claim 1,
**characterised in that**
the respective cutout (26) is designed to be L-shaped.

3. Air filter (10) according to claim 1,
**characterised in that**
the respective cutout (26) is designed to be T-shaped.

4. Air filter (10) according to claim 1,
**characterised in that**
the respective cutout (26) is designed as a narrow slot with a wide protrusion in the region remote from the edge (27).

5. Air filter (10) according to any of the preceding claims,
**characterised in that**
several cutouts (28) are provided.

6. Air filter (10) according to any of the preceding claims,
**characterised in that**
several cutouts (28) are arranged congruently in the insertion direction, with the result that they can be brought into engagement with an individual guide element (40, 42) in the insertion process.

7. Air filter (10) according to any of the preceding claims,
**characterised in that**
the filter medium (26) is designed as a pleated filter cloth and at least in certain areas secured to frame wall parts (20, 24) of the frame wall (16).

8. Air filter (10) according to any of the preceding claims,
**characterised in that**
folding edges of a pleat of the filter medium (26) are oriented in the insertion direction.

9. Arrangement of an air filter (10) in a ventilation device (14) of a motor vehicle, wherein the air filter (10) has a planar extent along which the air filter (10) is inserted into a flow cross-section (12) of the ventilation device (14) transversely to the direction of flow, and having a filter medium (26), which is arranged along its planar extent and is at least in certain areas bounded by at least one frame wall (16), which has at least one cutout (26), which can be brought into engagement with guide elements (40, 42) of the ventilation device (14) to guide the air filter (10) while it is being inserted into the flow cross-section (12),
**characterised in that**
the cutout (26) is designed as a notch at an edge (27) of the frame wall (16) and is undercut with reference to the edge (27), whereby the air filter (10) is supported in the insertion process in two directions transverse to the insertion direction.

## Revendications

1. Filtre à air (10) pour un dispositif de ventilation (14) d'un véhicule automobile, avec une étendue plane le long de laquelle le filtre à air (10) peut être inséré transversalement à une direction d'écoulement dans une section transversale d'écoulement (12) du dispositif de ventilation (14), et avec un milieu filtrant (26) disposé le long de son étendue plane qui est limité au moins par régions par au moins une paroi de cadre (16) qui présente au moins une découpe (28) qui peut être engagée avec des éléments de guidage (40, 42) du dispositif de ventilation (14) pour le guidage du filtre à air (10) lors de l'insertion dans la section transversale d'écoulement (12),
**caractérisé en ce que**
la découpe (28) est configurée en tant qu'entaille sur une arête (27) de la paroi de cadre (16) et réalisée à contre-dépouille par rapport à l'arête (27), moyennant quoi une capacité d'appui du filtre à air (10) est donnée transversalement à la direction d'insertion lors de l'insertion dans deux directions.

2. Filtre à air (10) selon la revendication 1,
**caractérisé en ce que**
la découpe respective (28) est réalisée en forme de L.

3. Filtre à air (10) selon la revendication 1,
**caractérisé en ce que**
la découpe respective (28) est réalisée en forme de T.

4. Filtre à air (10) selon la revendication 1,
**caractérisé en ce que**
la découpe respective (28) est réalisée en tant que fente étroite avec une large cavité dans la région écartée de l'arête (27).

5. Filtre à air (10) selon une des revendications précédentes,
**caractérisé en ce que**
plusieurs découpes (28) sont prévues.

6. Filtre à air (10) selon une des revendications précédentes,
**caractérisé en ce que**
plusieurs découpes (28) sont disposées de manière congruente dans la direction d'insertion, moyennant quoi elles peuvent être engagées avec un élément de guidage individuel (40, 42) lors de l'insertion.

7. Filtre à air (10) selon une des revendications précédentes,
**caractérisé en ce que**
le milieu filtrant (26) est réalisé en tant que non-tissé filtrant plié et est fixé au moins par régions à des parties de paroi de cadre (20, 24) de la paroi de cadre (16).

8. Filtre à air (10) selon une des revendications précédentes,
**caractérisé en ce que**
des arêtes de pli d'un pli du milieu filtrant (26) sont orientées dans la direction d'insertion.

9. Agencement d'un filtre à air (10) dans un dispositif de ventilation (14) d'un véhicule automobile, dans lequel le filtre à air (10) présente une étendue plane le long de laquelle le filtre à air (10) est inséré transversalement à une direction d'écoulement dans une section transversale d'écoulement (12) du dispositif de ventilation (14), et avec un milieu filtrant (26) disposé le long de son étendue plane qui est limité au moins par régions par au moins une paroi de cadre (16) qui présente au moins une découpe (28) qui peut être engagée avec des éléments de guidage (40, 42) du dispositif de ventilation (14) pour le guidage du filtre à air (10) lors de l'insertion dans la section transversale d'écoulement (12),
**caractérisé en ce que**
la découpe (28) est configurée en tant qu'entaille sur une arête (27) de la paroi de cadre (16) et réalisée à contre-dépouille par rapport à l'arête (27), moyennant quoi le filtre à air (10) est appuyé transversalement à la direction d'insertion lors de l'insertion dans deux directions.
